# EUROPÄISCHE PATENTSCHRIFT

(11) **EP 3 351 449 B1**
(45) Veröffentlichungstag und Bekanntmachung des Hinweises auf die Patenterteilung: **20.09.2023**
(21) Anmeldenummer: 17202475.4
(22) Anmeldetag: 20.11.2017
(51) Int. Cl.: B60W 20/40, B60W 10/02, B60W 10/06, B60W 10/08, B60W 10/11, B60K 6/48, B60K 6/547, B60K 6/387, B60W 20/50, B60W 50/02

(54) **VERFAHREN ZUM BETREIBEN EINER ANTRIEBSEINRICHTUNG FÜR EIN KRAFTFAHRZEUG SOWIE ENTSPRECHENDE ANTRIEBSEINRICHTUNG**
METHOD FOR OPERATING A DRIVE DEVICE FOR A MOTOR VEHICLE AND CORRESPONDING DRIVE DEVICE
PROCÉDÉ DE FONCTIONNEMENT D'UN DISPOSITIF D'ENTRAÎNEMENT POUR VÉHICULE AUTOMOBILE ET DISPOSITIF D'ENTRAÎNEMENT CORRESPONDANT

(30) Priorität: 23.01.2017 DE 102017200977
(43) Veröffentlichungstag der Anmeldung: 25.07.2018
(73) Patentinhaber: AUDI AG, 85045 Ingolstadt (DE)
(72) Erfinder: Schneider, Michael, 85134 Stammham (DE); Kaartometsä, Henrik, 85080 Gaimersheim (DE); Brückl, Bernhard, 85302 Gerolsbach (DE)

(56) Entgegenhaltungen:
- EP-A2- 3 088 228
- DE-A1-102007 055 826
- DE-A1-102007 055 828
- DE-A1-102008 002 383

## Beschreibung

Die Erfindung betrifft ein Verfahren zum Betreiben einer Antriebseinrichtung für ein Kraftfahrzeug, die eine Brennkraftmaschine, eine elektrische Maschine sowie ein Gangwechselgetriebe aufweist, wobei eine Antriebswelle der Brennkraftmaschine mittels einer Schaltkupplung mit einer Maschinenwelle der elektrischen Maschine koppelbar und die Maschinenwelle mit einer Getriebeeingangswelle des Gangwechselgetriebes gekoppelt ist, wobei eine Abtriebswelle der Antriebseinrichtung mit einer Getriebeausgangswelle des Gangwechselgetriebes gekoppelt oder koppelbar ist, und wobei die Schaltkupplung in einem ersten Schaltzustand zur Entkopplung der Brennkraftmaschine und der elektrischen Maschine geöffnet und in einem zweiten Schaltzustand zur Kopplung der Brennkraftmaschine und der elektrischen Maschine geschlossen ist, wobei bei einem Umschalten von dem ersten Schaltzustand in den zwischen Schaltzustand in einer ersten Betriebsart das Schließen der Schaltkupplung verzögert wird, wenn die Differenz zwischen einem Drehzahlgradient der Antriebswelle und einem Drehzahlgradient der Maschinenwelle einen Drehzahlgradientenschwellenwert übersteigt und/oder die Drehzahlgradienten unterschiedliche Vorzeichen aufweisen. Die Erfindung betrifft weiterhin eine Antriebseinrichtung.

Die Antriebseinrichtung dient dem Antreiben des Kraftfahrzeugs, insoweit also dem Bereitstellen eines auf das Antreiben des Kraftfahrzeugs gerichteten Drehmoments. Die Antriebseinrichtung verfügt über mehrere Antriebsaggregate, wobei ein erstes der Antriebsaggregate als Brennkraftmaschine und ein zweites der Antriebsaggregate als elektrische Maschine ausgestaltet ist. Die Antriebseinrichtung liegt insoweit als Hybridantriebseinrichtung vor. Zusätzlich zu den Antriebsaggregaten verfügt die Antriebseinrichtung über das Gangwechselgetriebe, welches wiederum eine Getriebeeingangswelle und eine Getriebeausgangswelle aufweist. Mithilfe des Gangwechselgetriebes sind zwischen der Getriebeeingangswelle und der Getriebeausgangswelle unterschiedliche Übersetzungen einstellbar beziehungsweise eine aus mehreren unterschiedlichen Übersetzungen ausgewählte Übersetzung einstellbar.

Die Brennkraftmaschine verfügt über die Antriebswelle, welche beispielsweise einer Kurbelwelle der Brennkraftmaschine entspricht oder mit dieser gekoppelt ist, vorzugsweise starr und/oder permanent. Die elektrische Maschine weist dagegen die Maschinenwelle auf, welche wiederum mit einem Rotor der elektrischen Maschine gekoppelt ist, bevorzugt ebenso starr und/oder permanent. Die Antriebswelle der Brennkraftmaschine und die Maschinenwelle der elektrischen Maschine sind mittels der Schaltkupplung koppelbar. Das bedeutet, dass in dem ersten Schaltzustand der Schaltkupplung die Antriebswelle mit der Maschinenwelle gekoppelt ist, vorzugsweise starr, also drehfest beziehungsweise schlupffrei. Hierzu kann in dem ersten Schaltzustand - bei entsprechender Ausgestaltung der Schaltkupplung, beispielsweise als Lamellenkupplung - eine Kupplungsüberpressung der Schaltkupplung vorgesehen sein, sodass bei während des Betriebs der Antriebseinrichtung üblicherweise auftretenden Drehmomenten kein Kupplungsschlupf der Schaltkupplung auftritt.

In dem zweiten Schaltzustand ist die Schaltkupplung dagegen zumindest teilweise, insbesondere vollständig, geöffnet. Bevorzugt ist also in dem zweiten Schaltzustand die Antriebswelle von der Maschinenwelle vollständig entkoppelt. Die Maschinenwelle der elektrischen Maschine ist mit der Getriebeeingangswelle des Gangwechselgetriebes gekoppelt, vorzugsweise starr und/oder permanent, oder zumindest koppelbar. Die Getriebeausgangswelle des Gangwechselgetriebes wiederum ist mit der Abtriebswelle der Antriebseinrichtung gekoppelt, insbesondere starr und/oder permanent, und/oder zumindest koppelbar.

Unter der Abtriebswelle der Antriebseinrichtung ist eine Welle zu verstehen, an welcher die Antriebseinrichtung das zum Antreiben des Kraftfahrzeugs zu verwendende Antriebsdrehmoment bereitstellt. Insoweit ist die Abtriebswelle beispielsweise mit einer Radachse des Kraftfahrzeugs oder zumindest einem Rad des Kraftfahrzeugs gekoppelt, insbesondere starr und/oder permanent, oder zumindest koppelbar. Beispielsweise ist die Maschinenwelle einerseits der elektrischen Maschine an die Schaltkupplung und andererseits der elektrischen Maschine an die Getriebeeingangswelle angeschlossen. Die elektrische Maschine kann zu der Getriebeeingangswelle koaxial angeordnet sein. Auch andere Anordnungen der elektrischen Maschine sind jedoch realisierbar.

Aus dem Stand der Technik ist die Druckschrift EP 3 088 228 A2 bekannt. Diese beschreibt ein Verfahren und eine Vorrichtung zum Steuern einer Motorkupplung. Das Verfahren umfasst die Feststellung, ob bei stillstehendem Motor eine Motorstartbedingung erfüllt ist, und die Durchführung eines Motoranlassvorgangs durch Betätigung eines Hybridanlassers und -generators (HSG), wenn die Motorstartbedingung erfüllt ist. Es wird festgestellt, ob eine Motordrehzahl größer oder gleich einer ersten Referenzdrehzahl ist, um ein HSG-Drehmoment zu reduzieren. Weiterhin wird festgestellt, ob die Motordrehzahl größer oder gleich einer zweiten Referenzdrehzahl ist, um eine Solldrehzahl des Motors zu berechnen. Eine Drehzahlregelung des Motors wird unter Verwendung der Solldrehzahl des Motors durchgeführt, während festgestellt wird, ob eine Motorkupplungsbetätigungsbedingung erfüllt ist. Eine Motorkupplung wird betätigt, wenn die Motorkupplungsbetätigungsbedingung erfüllt ist.

Weiterhin sind aus dem Stand der Technik die Druckschriften DE 10 2007 055 826 A1 und DE 10 2007 055 828 A1 bekannt.

Es ist Aufgabe der Erfindung, ein Verfahren zum Betreiben einer Antriebseinrichtung für ein Kraftfahrzeug vorzuschlagen, welches gegenüber bekannten Verfahren Vorteile aufweist, insbesondere ein zuverlässiges und komfortables Ankoppeln der Brennkraftmaschine an die elektrische Maschine, vorzugsweise während eines Startens der Brennkraftmaschine, ermöglicht.

Dies wird erfindungsgemäß mit einem Verfahren mit den Merkmalen des Anspruchs 1 erreicht. Dabei ist vorgesehen, dass bei dem Umschalten von dem ersten Schaltzustand in den zweiten Schaltzustand in einer zweiten Betriebsart das Schließen der Schaltkupplung unverzüglich durchgeführt wird, wobei aus der ersten Betriebsart in die zweite Betriebsart gewechselt wird, wenn ein an der Antriebseinrichtung eingestelltes Vorgabedrehmoment einen Drehmomentschwellenwert überschreitet und/oder eine Drehzahldifferenz zwischen der Drehzahl der Antriebswelle und der Drehzahl der Maschinenwelle kleiner ist als ein Drehzahldifferenzschwellenwert und/oder ein Wandlerschlupf eines Drehmomentwandlers des Gangwechselgetriebes unbekannt ist und/oder ein Geschwindigkeitssignal ungültig ist, und dass ein Gangwechsel von einem Ausgangsgang in einen Zielgang mittels des Gangwechselgetriebes in der ersten Betriebsart während des Umschaltens von dem ersten Schaltzustand in den zweiten Schaltzustand und in der zweiten Betriebsart nach dem Schließen der Schaltkupplung durchgeführt wird.

Grundsätzlich ist vorgesehen, dass bei einem Umschalten von dem ersten Schaltzustand in den zweiten Schaltzustand in einer ersten Betriebsart das Schließen der Schaltkupplung verzögert wird, wenn die Differenz zwischen einem Drehzahlgradient der Antriebswelle und einem Drehzahlgradient der Maschinenwelle einen Drehzahlgradientenschwellenwert übersteigt und/oder die Drehzahlgradienten unterschiedliche Vorzeichen aufweisen. Unter dem Drehzahlgradient ist der Gradient der Drehzahl über der Zeit zu verstehen. Bei einer Zunahme der Drehzahl liegt dabei ein positives Vorzeichen und bei einer Verringerung der Drehzahl ein negatives Vorzeichen vor.

Bei dem Umschalten aus dem ersten Schaltzustand in den zweiten Schaltzustand soll die Brennkraftmaschine mit der elektrischen Maschine gekoppelt werden, also aus dem entkoppelten Zustand in den zumindest teilweise gekoppelten Zustand, insbesondere jedoch starr gekoppelten Zustand, überführt werden. Zu Beginn des Umschaltens ist entsprechend die Brennkraftmaschine von der elektrischen Maschine entkoppelt, nämlich vollständig entkoppelt. Nach dem Umschalten dagegen ist die Brennkraftmaschine mit der elektrischen Maschine gekoppelt. Entsprechend ist es während des Umschaltens notwendig, die Schaltkupplung zu schließen, um die Kopplung zwischen der Brennkraftmaschine und der elektrischen Maschine zu erzielen.

Dieses Schließen der Schaltkupplung wird jedoch verzögert beziehungsweise herausgezögert, wenn wenigstens eine bestimmte Bedingung zutrifft. Diese bestimmte Bedingung kann beispielsweise sein, dass die Differenz zwischen den Drehzahlgradienten, also zwischen dem Drehzahlgradient der Antriebswelle und dem Drehzahlgradient der Maschinenwelle, den Drehzahlgradientenschwellenwert übersteigt, also größer ist als dieser. Eine andere Bedingung ist, dass die Drehzahlgradienten, also wiederum der Drehzahlgradient der Antriebswelle und der Drehzahlgradient der Maschinenwelle, unterschiedliche Vorzeichen aufweisen. Ist genau eine oder wenigstens eine der genannten Bedingungen erfüllt, so wird das Schließen verzögert, das Schließen der Schaltkupplung also zunächst nicht durchgeführt. Selbstverständlich kann es auch vorgesehen sein, dass das Schließen nur dann verzögert wird, wenn mehrere der genannten Bedingungen erfüllt sind.

Beispielsweise ist es bei dem Umschalten von dem ersten Schaltzustand in den zweiten Schaltzustand vorgesehen, die Drehzahl der Brennkraftmaschine beziehungsweise der Antriebswelle an die Drehzahl der elektrischen Maschine beziehungsweise die Drehzahl der Maschinenwelle anzugleichen und anschließend die Schaltkupplung zu schließen. Selbst bei übereinstimmenden Drehzahlen oder zumindest nahezu übereinstimmenden Drehzahlen kann das Schließen der Schaltkupplung jedoch für einen Insassen beziehungsweise einen Fahrer des Kraftfahrzeugs unkomfortabel erscheinen, wenn gleichzeitig die Drehzahlgradienten zu stark voneinander abweichen beziehungsweise unterschiedliche Vorzeichen aufweisen. Der letztere Fall kann beispielsweise eintreten, wenn die Drehzahl der Antriebswelle erhöht und gleichzeitig die Drehzahl der Maschinenwelle verringert wird. Die Drehzahlerhöhung der Antriebswelle und die Drehzahlverringerung der Maschinenwelle können nun durchaus dazu führen, dass die Drehzahlen der Antriebswelle und der Maschinenwelle übereinstimmen.

Wird nun jedoch die Schaltkupplung geschlossen, so müssen trotz der übereinstimmenden Drehzahlen zunächst die Drehzahlgradienten aneinander angeglichen werden. Dies kann bei zu starker Abweichung der Drehzahlgradienten voneinander zu einer deutlich wahrnehmbaren Drehzahlveränderung führen. Aus diesem Grund ist es zunächst vorgesehen, das Schließen der Schaltkupplung zu verzögern, also nicht vorzunehmen. Insbesondere wird während des Verzögerns der momentan vorliegende Schaltzustand der Kupplung konstant gehalten, insbesondere die Schaltkupplung in dem ersten Schaltzustand gehalten, also nicht aus dem ersten Schaltzustand herausgebracht.

Im Rahmen einer weiteren Ausgestaltung der Erfindung ist vorgesehen, dass das Umschalten von dem ersten Schaltzustand in den zweiten Schaltzustand während eines Startens der Brennkraftmaschine durchgeführt wird. Unter dem Starten der Brennkraftmaschine ist zu verstehen, dass diese von einer Drehzahl, welche kleiner ist als eine Mindestdrehzahl und/oder eine Leerlaufdrehzahl, auf die Mindestdrehzahl oder die Leerlaufdrehzahl gebracht wird. Unter der Mindestdrehzahl ist vorzugsweise eine Drehzahl der Brennkraftmaschine zu verstehen, ab welcher sie selbsttätig, also ohne Einfluss eines externen Drehmoments, ihre Drehzahl selbsttätig bei befeuertem Betrieb erhöhen kann. Die Leerlaufdrehzahl ist dagegen die Drehzahl der Brennkraftmaschine, welche üblicherweise an dieser eingestellt wird, wenn die Brennkraftmaschine nicht zum Bereitstellen des Antriebsdrehmoments an der Abtriebswelle beitragen soll. Die Leerlaufdrehzahl ist dabei üblicherweise höher als die Mindestdrehzahl und vorzugsweise derart gewählt, dass ein möglichst ruhiger und geräuscharmer Betrieb der Brennkraftmaschine vorliegt.

Das Starten der Brennkraftmaschine kann sowohl im Rahmen eines Kaltstarts als auch eines Warmstarts beziehungsweise Wiederstarts erfolgen. Ebenso kann das Starten der Brennkraftmaschine aus einer beliebigen Ausgangsdrehzahl heraus erfolgen, beispielsweise aus einer Ausgangsdrehzahl von Null heraus, also aus einem Stillstand der Brennkraftmaschine. Das Starten der Brennkraftmaschine kann selbstverständlich auch aus einer von Null verschiedenen Ausgangsdrehzahl heraus vorgenommen werden. Dies ist insbesondere der Fall, falls das Starten mit einem derartig kurzen Zeitabstand zu einer dem Starten unmittelbar vorhergehenden Abstellen der Brennkraftmaschine erfolgt, dass die Brennkraftmaschine noch nicht vollständig zum Stillstand gekommen ist.

Während des Startens der Brennkraftmaschine wird die Drehzahl der Brennkraftmaschine erhöht, der Drehzahlgradient der Antriebswelle ist also größer als Null. Das Verzögern des Schließens der Schaltkupplung wird nun beispielsweise durchgeführt, wenn eine Drehzahlverringerung der elektrischen Maschine mit dem Starten der Brennkraftmaschine zusammenfällt, also gleichzeitig auftritt. In diesem Fall weisen die Drehzahlgradienten unterschiedliche Vorzeichen auf, sodass auch bei übereinstimmenden Drehzahlen üblicherweise kein komfortables Schließen der Schaltkupplung möglich ist.

Die Erfindung sieht vor, dass während des Umschaltens von dem ersten Schaltzustand in den zweiten Schaltzustand ein Gangwechsel von einem Ausgangsgang in einen Zielgang mittels des Gangwechselgetriebes durchgeführt wird. Der Ausgangsgang und der Zielgang weisen unterschiedliche Übersetzungen auf, sodass zwischen der Getriebeausgangswelle und der Getriebeeingangswelle und mithin der Maschinenwelle der elektrischen Maschine vor dem Gangwechsel eine andere Übersetzung vorliegt als nach dem Gangwechsel.

Fällt nun das Umschalten von dem ersten Schaltzustand in den zweiten Schaltzustand mit diesem Gangwechsel zusammen, so kann trotz im Wesentlichen gleichbleibender Fahrgeschwindigkeit des Kraftfahrzeugs und mithin im Wesentlichen gleichbleibender Drehzahl der Getriebeausgangswelle eine rasche Veränderung der Drehzahl der Getriebeeingangswelle und entsprechend ein großer Drehzahlgradient der Maschinenwelle vorliegen. In diesem Fall soll das Schließen der Schaltkupplung zunächst verzögert werden. Dies insbesondere, falls der Gangwechsel zudem mit dem Starten der Brennkraftmaschine zusammenfällt und der Gangwechsel im Rahmen eines Zurückschaltens erfolgt, also einer Verringerung des mittels des Gangwechselgetriebes eingelegten Fahrgangs, sodass der Ausgangsgang größer ist als der Zielgang. In diesem Fall tritt eine Vergrößerung der Drehzahl der Getriebeeingangswelle und entsprechend der Maschinenwelle auf.

Eine weitere Ausgestaltung der Erfindung sieht vor, dass im Falle des Verzögerns des Schließens der Schaltkupplung an der Brennkraftmaschine eine Solldrehzahl eingestellt wird, die aus einer Drehzahl der Getriebeausgangswelle und dem Zielgang ermittelt wird. Zunächst werden also die Drehzahl der Getriebeausgangswelle und der Zielgang festgestellt. Anschließend wird aus diesen Größen die Solldrehzahl bestimmt. Die Solldrehzahl entspricht dabei vorzugsweise der Drehzahl der Getriebeeingangswelle, welche sich nach dem Einlegen des Zielgangs bei Vorliegen der Drehzahl der Getriebeausgangswelle ergibt. Die Solldrehzahl ist entsprechend diejenige Drehzahl, die sich aus der Drehzahl der Getriebeausgangswelle und der Übersetzung des Zielgangs ergibt.

Die Solldrehzahl wird an der Brennkraftmaschine eingestellt und eine Istdrehzahl der Brennkraftmaschine auf die Solldrehzahl gesteuert oder geregelt. Insbesondere erfolgt dies derart, dass die Brennkraftmaschine nach Abschluss des Gangwechsels mittels des Gangwechselgetriebes bereits bei einer der Solldrehzahl entsprechenden Istdrehzahl betrieben wird. Es wird also vorausschauend die wahrscheinlich nach dem Gangwechsel vorliegende Drehzahl der Getriebeeingangswelle und entsprechend der Maschinenwelle ermittelt und die Brennkraftmaschine bereits auf das Schließen der Schaltkupplung durch Einstellen der entsprechenden Solldrehzahl vorbereitet.

Eine weitere Ausgestaltung der Erfindung sieht vor, dass das Verzögern beendet und die Schaltkupplung geschlossen wird, wenn die Istdrehzahl der Solldrehzahl entspricht und/oder die Differenz kleiner oder gleich dem Drehzahlgradientenschwellenwert ist und/oder die Drehzahlgradienten dasselbe Vorzeichen aufweisen. Das Verzögern wird insoweit beendet, wenn genau eine oder wenigstens eine der genannten Bedingungen zutrifft. Vorzugsweise müssen jedoch mehrere der genannten Bedingungen zutreffen, um das Verzögern zu beenden. Insbesondere ist es vorgesehen, dass stets die Istdrehzahl mit der Solldrehzahl übereinstimmen muss und wenigstens eine der weiteren Bedingungen zutrifft.

Die Erfindung sieht vor, dass bei dem Umschalten von dem ersten Schaltzustand in den zweiten Schaltzustand in einer zweiten Betriebsart das Schließen der Schaltkupplung unverzüglich durchgeführt wird, insbesondere unabhängig von der Differenz zwischen den Drehzahlgradienten und/oder den Vorzeichen. Das Verzögern des Schließens der Schaltkupplung wird also nur in der ersten Betriebsart, nicht jedoch in der zweiten Betriebsart, vorgenommen. In der zweiten Betriebsart wird bei dem Umschalten das Schließen der Schaltkupplung unverzüglich vorgenommen, also ohne Verzögern. Das Schließen der Schaltkupplung ist mithin unabhängig von der Differenz zwischen den Drehzahlgradienten beziehungsweise den Vorzeichen der Drehzahlgradienten.

Die Erfindung sieht vor, das aus der ersten Betriebsart in die zweite Betriebsart gewechselt wird, wenn ein an der Antriebseinrichtung eingestelltes Vorgabedrehmoment einen Drehmomentschwellenwert überschreitet und/oder eine Drehzahldifferenz zwischen der Drehzahl der Antriebswelle und der Drehzahl der Maschinenwelle kleiner ist als ein Drehzahldifferenzschwellenwert und/oder ein Wandlerschlupf eines Drehmomentwandlers des Gangwechselgetriebes unbekannt ist und/oder ein Geschwindigkeitssignal ungültig ist. Beispielsweise ist es vorgesehen, dass normalerweise die erste Betriebsart durchgeführt wird und lediglich in die zweite Betriebsart gewechselt wird, wenn genau eine, wenigstens eine oder mehrere beziehungsweise alle der genannten Bedingungen zutreffen. In anderen Worten wird aus der ersten Betriebsart in die zweite Betriebsart gewechselt, wenn eine Auswahl aus den genannten Bedingungen zutrifft. Trifft die Auswahl jedoch nicht zu, so wird aus der zweiten Betriebsart zurück in die erste Betriebsart gewechselt.

Das Vorgabedrehmoment ist beispielsweise ein von einem Fahrer des Kraftfahrzeugs und/oder einer Fahrerassistenzeinrichtung vorgegebenes Drehmoment. Beispielsweise entspricht das an der Antriebseinrichtung eingestellte Solldrehmoment dem Vorgabedrehmoment. Überschreitet das Vorgabedrehmoment den Drehmomentschwellenwert, liegt also eine besonders hohe Drehmomentanforderung vor, so ist es vorteilhaft, das Ankoppeln der Brennkraftmaschine an die elektrische Maschine unverzüglich vorzunehmen. Zusätzlich oder alternativ kann darauf geprüft werden, ob der Drehzahldifferenzschwellenwert von der Drehzahldifferenz unterschritten wird. Der Drehzahldifferenzschwellenwert kann grundsätzlich beliebig festgelegt sein, insbesondere wird er derart gewählt, dass bei seinem Unterschreiten durch die Drehzahldifferenz ein komfortables Koppeln der Brennkraftmaschine mit der elektrischen Maschine möglich ist. Weiterhin kann darauf geprüft werden, ob der Wandlerschlupf des Drehmomentwandlers bekannt oder unbekannt ist. Unbekannter Wandlerschlupf liegt insbesondere vor, wenn eine Wandlerüberbrückungskupplung des Drehmomentwandlers geöffnet ist, sodass der einstellende Schlupf in dem Drehmomentwandler nicht berechnet werden kann. Weiterhin kann darauf geprüft werden, ob das Geschwindigkeitssignal gültig oder ungültig ist. Das Geschwindigkeitssignal ist beispielweise ein mit der Drehzahl oder der Fahrgeschwindigkeit korrespondierendes Signal.

Schließlich ist im Rahmen der Erfindung vorgesehen, dass in der zweiten Betriebsart die Schaltkupplung geschlossen wird, bevor der Gangwechsel mittels des Gangwechselgetriebes durchgeführt wird. Überschneiden sich das Umschalten von dem ersten Schaltzustand in den zweiten Schaltzustand und der Gangwechsel, so wird in der zweiten Betriebsart die Schaltkupplung möglichst rasch geschlossen, nämlich bevor der Gangwechsel durchgeführt wird. Auf diese Art und Weise kann besonders rasch das von der Brennkraftmaschine erzeugte Drehmoment an der Abtriebswelle bereitgestellt werden.

Eine weitere Ausgestaltung der Erfindung sieht vor, dass das Starten der Brennkraftmaschine durch Anschleppen der Brennkraftmaschine mittels eines Starters und/oder durch lediglich teilweises Schließen der Schaltkupplung durchgeführt wird. Das Starten der Brennkraftmaschine kann hierbei jeweils entweder befeuert oder unbefeuert durchgeführt werden. In jedem Fall wird die Brennkraftmaschine angeschleppt. Dies kann mithilfe des Starters, beispielsweise eines Riemenstarters, oder durch das lediglich teilweise Schließen der Schaltkupplung realisiert sein. Das lediglich teilweise Schließen der Schaltkupplung im Rahmen des Startens der Brennkraftmaschine unterscheidet sich dabei von dem Schließen der Schaltkupplung bei dem Umschalten von dem ersten Schaltzustand in den zweiten Schaltzustand. Das bei dem Umschalten durchgeführte Schließen erfolgt weitergehend als das Schließen zum Anschleppen der Brennkraftmaschine, insbesondere wird im ersten Fall ein höheres Kupplungsdrehmoment eingestellt als in letzterem Fall.

Eine Weiterbildung der Erfindung sieht vor, dass ein zum Starten der Brennkraftmaschine verwendetes, an der Schaltkupplung einzustellendes Kupplungssolldrehmoment aus einer Temperatur und/oder einer - insbesondere im Stillstand der Brennkraftmaschine vorliegenden - Kurbelwellenstellung der Brennkraftmaschine ermittelt wird. Das Kupplungssolldrehmoment ist das Drehmoment, welches mittels der Schaltkupplung übertragen werden soll. Ein tatsächlich über die Schaltkupplung übertragenes Kupplungsistdrehmoment wird vorzugsweise auf das Kupplungssolldrehmoment eingestellt, insbesondere steuernd und/oder regelnd.

Das Kupplungssolldrehmoment wird nun anhand der Temperatur und/oder der Kurbelwellenstellung der Brennkraftmaschine bestimmt. Beispielsweise ist das Kupplungssolldrehmoment umso höher, je niedriger die Temperatur ist. Als Temperatur wird beispielsweise eine Brennkraftmaschinentemperatur der Brennkraftmaschine, beispielsweise eine Schmiermitteltemperatur, herangezogen. Zusätzlich oder alternativ wird die Kurbelwellenstellung herangezogen, welche vor dem Starten, insbesondere im Stillstand der Brennkraftmaschine, vorliegt.

Die Kurbelwellenstellung beschreibt beispielsweise einen Drehwinkel, um welchen die Kurbelwelle der Brennkraftmaschine gedreht werden muss, bis für denjenigen Zylinder der obere Totpunkt erreicht ist, in welchem zuerst eine Verdichtung und/oder Kraftstoffeinspritzung vorgenommen wird. Bei kleinem Drehwinkel muss weniger Gemisch verdichtet werden als bei großem Drehwinkel, weil der erste zu befeuernde Zylinder kurz vor seinem oberen Totpunkt steht. Entsprechend wird das Kupplungssolldrehmoment umso kleiner gewählt, je kleiner der Drehwinkel ist.

Eine weitere bevorzugte Ausgestaltung der Erfindung sieht vor, dass das Kupplungssolldrehmoment nach oben korrigiert wird, wenn die Drehzahl der Brennkraftmaschine zu Beginn des Startens größer als Null ist oder eine Zeitspanne nach einem Abstellen eine Vorgabezeitspanne unterschreitet, wobei das Kupplungssolldrehmoment umso größer gewählt wird, je weiter die Zeitspanne die Vorgabezeitspanne unterschreitet. Vorstehend wurde bereits dargelegt, dass das Starten der Brennkraftmaschine aus einer beliebigen Ausgangsdrehzahl heraus erfolgen kann. Liegt ein dem Starten vorhergehendes Abstellen der Brennkraftmaschine erst kurze Zeit zurück, ist die Drehzahl grö-ßer als Null. Entsprechend liegt in dem nächsten Zylinder, in welchem eine Verdichtung vorgenommen werden soll, bereits ein vorverdichtetes Gemisch vor.

Dies macht eine Erhöhung des Kupplungssolldrehmoments notwendig. Beispielsweise erfolgt die Erhöhung des Kupplungssolldrehmoments innerhalb eines bestimmten Drehzahlbereichs der Brennkraftmaschine. Dieser Drehzahlbereich weist als untere Grenze beispielsweise eine Drehzahl von größer als Null, insbesondere infinitesimal größer als Null, auf, bei welcher sich die Brennkraftmaschine bei ihrem Auslaufen gerade noch in Bewegung befindet. Als obere Grenze kann der Drehzahlbereich eine Drehzahl aufweisen, die kleiner ist als die Mindestdrehzahl und/oder die Leerlaufdrehzahl. Insbesondere beträgt die Drehzahl höchstens 75 %, höchstens 50 %, höchstens 40 %, höchstens 30 % oder höchstens 25 % der Mindestdrehzahl. Überschreitet die Drehzahl der Brennkraftmaschine den Drehzahlbereich, liegt also oberhalb von diesem, so kann auf das Erhöhen des Kupplungssolldrehmoments verzichtet werden, weil die noch rotierenden Massen der Brennkraftmaschine das Starten unterstützen.

Ist beim Auslaufen der Brennkraftmaschine eine Drosselklappe geöffnet, so werden die Zylinder der Brennkraftmaschine noch mit der vollen Luftfüllung versorgt. Entsprechend liegt eine vorverdichtete Luftfüllung in dem ersten zu verdichtenden Zylinder vor. Diese erhöhte Füllung wird nach Stehenbleiben der Brennkraftmaschine langsam über Undichtigkeiten des Zylinders, beispielsweise der Zylinderdichtungen, abgebaut. Die erhöhte Füllung im ersten zu verdichtenden Zylinder soll bei der Berechnung des Kupplungssolldrehmoments berücksichtigt werden. Entsprechend wird die Zeitspanne nach dem Starten vorhergehenden Abstellen berücksichtigt und das Kupplungssolldrehmoment nach oben korrigiert, wenn die Zeitspanne die Vorgabezeitspanne unterschreitet. Es ist hierbei vorgesehen, dass das Kupplungssolldrehmoment umso größer gewählt wird, je weiter die Zeitspanne die Vorgabezeitspanne unterschreitet. Beispielsweise wird das Kupplungssolldrehmoment linear über der Zeit nach dem Abstellen der Brennkraftmaschine reduziert.

Eine weitere Ausführungsform der Erfindung sieht vor, dass ein mittels der elektrischen Maschine bereitstellbares Antriebsdrehmoment auf einen Drehmomentgrenzwert begrenzt wird, der aus einem maximalen Antriebsdrehmoment der elektrischen Maschine und einer Drehmomentreserve ermittelt wird. Das Maximalantriebsdrehmoment entspricht dem maximalen mittels der elektrischen Maschine bereitstellbaren Drehmoment. Das Maximalantriebsdrehmoment entspricht dabei vorzugsweise einem Nenndrehmoment, bei welchem die elektrische Maschine dauerhaft und durchgehend betrieben werden kann.

Aus dem Maximalantriebsdrehmoment und der Drehmomentreserve wird der Drehmomentgrenzwert bestimmt. Der Drehmomentgrenzwert entspricht hierbei dem Maximalantriebsdrehmoment abzüglich der Drehmomentreserve. Durch das Vorsehen der Drehmomentreserve wird sichergestellt, dass stets ein zuverlässiges Starten der Brennkraftmaschine mithilfe der elektrischen Maschine möglich ist. Entsprechend wird das Antriebsdrehmoment, welches von der elektrischen Maschine erzeugt werden kann, auf den Drehmomentgrenzwert begrenzt.

Im Rahmen einer weiteren vorteilhaften Ausführungsform der Erfindung ist vorgesehen, dass die Drehmomentreserve aus einem zum Starten der Brennkraftmaschine benötigten Anschleppdrehmoment ermittelt wird. Das Anschleppdrehmoment entspricht dem Drehmoment, welches zum Anschleppen der Brennkraftmaschine benötigt wird, insbesondere zum Anschleppen auf die Mindestdrehzahl und/oder die Leerlaufdrehzahl. Die Drehmomentreserve wird nun beispielsweise gleich dem Anschleppdrehmoment gesetzt.

Eine weitere Ausgestaltung der Erfindung sieht vor, dass die Drehmomentreserve gleich dem Anschleppdrehmoment gesetzt wird, wenn ein Istdrehmoment der elektrischen Maschine kleiner ist als ein Maximalantriebsdrehmoment abzüglich dem Anschleppdrehmoment, und ansonsten gleich dem Maximalantriebsdrehmoment minus dem Istdrehmoment gesetzt und anschließend erhöht wird. Somit kann die Drehmomentreserve für den Fahrer des Kraftfahrzeugs unmerklich bereitgestellt werden, nämlich indem die Drehmomentreserve zunächst derart gewählt wird, dass sie das Istdrehmoment nicht beeinflusst und anschließend langsam erhöht wird, sodass das Istdrehmoment der elektrischen Maschine langsam abnimmt.

Die Erfindung betrifft weiterhin eine Antriebseinrichtung für ein Kraftfahrzeug, insbesondere zur Durchführung des vorstehend beschriebenen Verfahrens, die eine Brennkraftmaschine, eine elektrische Maschine sowie ein Gangwechselgetriebe aufweist, wobei eine Antriebswelle der Brennkraftmaschine mittels einer Schaltkupplung mit einer Maschinenwelle der elektrischen Maschine koppelbar und die Maschinenwelle mit einer Getriebeeingangswelle des Gangwechselgetriebes gekoppelt ist, wobei eine Abtriebswelle der Antriebseinrichtung mit einer Getriebeausgangswelle des Gangwechselgetriebes gekoppelt oder koppelbar ist und wobei die Schaltkupplung in einem ersten Schaltzustand zur Entkopplung der Brennkraftmaschine und der elektrischen Maschine geöffnet und in einem zweiten Schaltzustand zur Kopplung der Brennkraftmaschine und der elektrischen Maschine geschlossen ist.

Dabei ist vorgesehen, dass die Antriebseinrichtung dazu ausgebildet ist, bei einem Umschalten von dem ersten Schaltzustand in den zweiten Schaltzustand in einer ersten Betriebsart das Schließen der Schaltkupplung zu verzögern, wenn die Differenz zwischen einem Drehzahlgradient der Antriebswelle und einem Drehzahlgradient der Maschinenwelle einen Drehzahlgradientenschwellenwert übersteigt und/oder die Drehzahlgradienten unterschiedliche Vorzeichen aufweisen.

Weiterhin ist vorgesehen, dass bei dem Umschalten von dem ersten Schaltzustand in den zweiten Schaltzustand in einer zweiten Betriebsart das Schlie-ßen der Schaltkupplung unverzüglich durchgeführt wird, wobei aus der ersten Betriebsart in die zweite Betriebsart gewechselt wird, wenn ein an der Antriebseinrichtung eingestelltes Vorgabedrehmoment einen Drehmomentschwellenwert überschreitet und/oder eine Drehzahldifferenz zwischen der Drehzahl der Antriebswelle und der Drehzahl der Maschinenwelle kleiner ist als ein Drehzahldifferenzschwellenwert und/oder ein Wandlerschlupf eines Drehmomentwandlers des Gangwechselgetriebes unbekannt ist und/oder ein Geschwindigkeitssignal ungültig ist, und dass ein Gangwechsel von einem Ausgangsgang in einen Zielgang mittels des Gangwechselgetriebes in der ersten Betriebsart während des Umschaltens von dem ersten Schaltzustand in den zweiten Schaltzustand und in der zweiten Betriebsart nach dem Schließen der Schaltkupplung durchgeführt wird

Auf die Vorteile einer derartigen Vorgehensweise sowie einer entsprechenden Ausgestaltung der Antriebseinrichtung wurde bereits hingewiesen. Sowohl die Antriebseinrichtung als auch das Verfahren zu ihrem Betreiben können gemäß den vorstehenden Ausführungen weitergebildet sein, sodass insoweit auf diese verwiesen wird.

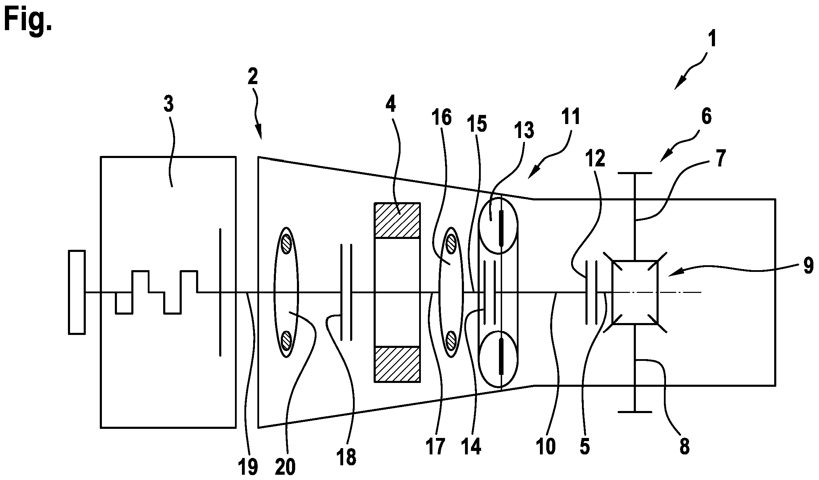

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung eines Antriebsstrangs 1 eines nicht weiter dargestellten Kraftfahrzeugs.

Der Antriebsstrang 1 verfügt über eine Antriebseinrichtung 2, die wiederum eine Brennkraftmaschine 3, eine elektrische Maschine sowie eine Abtriebswelle 5 aufweist. Die Antriebseinrichtung 2 dient dem Antreiben wenigstens einer Radachse 6 des Kraftfahrzeugs, welche sich aus zwei Teilachsen 7 und 8 zusammensetzt, die über ein Differentialgetriebe 9 mit der Abtriebswelle 5 der Antriebseinrichtung 2 gekoppelt sind. Die Abtriebswelle 5 ist mit einer Getriebeausgangswelle 10 eines Gangwechselgetriebes 11 der Antriebseinrichtung 2 gekoppelt, insbesondere starr und/oder permanent und/oder mittels einer optionalen Schaltkupplung 12 koppelbar.

Das Gangwechselgetriebe 11 kann beispielsweise einen Drehmomentwandler 13 aufweisen, welcher über eine Wandlerüberbrückungskupplung 14 verfügen kann. Das Gangwechselgetriebe 11 verfügt über eine Getriebeeingangswelle 15, die vorzugsweise permanent mit dem Drehmomentwandler 13 gekoppelt ist. Die Getriebeeingangswelle 15 kann unmittelbar oder - wie hier dargestellt - über eine Dämpfungseinrichtung 16, beispielsweise einen Torsionsschwingungsdämpfer, mit einer Maschinenwelle 17 der elektrischen Maschine 4 gekoppelt sein, insbesondere starr und/oder permanent. Die elektrische Maschine 4 kann koaxial zu der Getriebeeingangswelle 15 und/oder der Getriebeausgangswelle 10 angeordnet sein.

Eine Wirkverbindung zwischen der Brennkraftmaschine 3 und der elektrischen Maschine 4 ist mittels einer Schaltkupplung 18 einstellbar. Die Schaltkupplung 18 liegt hierbei zwischen einer Antriebswelle 19 der Brennkraftmaschine 3 und der Maschinenwelle 17 der elektrischen Maschine 4 vor. In der Wirkverbindung zwischen der Brennkraftmaschine 3 und der Schaltkupplung 18 kann zudem eine weitere Dämpfungseinrichtung 20 optional vorgesehen sein. Die Dämpfungseinrichtung 20 ist vorzugsweise als Zweimassenschwungrad ausgeführt.

In einem ersten Schaltzustand der Schaltkupplung 18 ist die Brennkraftmaschine 3 von der elektrischen Maschine 4 entkoppelt. In einem zweiten Schaltzustand ist sie dagegen mit ihr gekoppelt. Entsprechend ist die Schaltkupplung 18 in dem ersten Schaltzustand geöffnet, insbesondere vollständig geöffnet, und in dem zweiten Schaltzustand wenigstens teilweise, vorzugsweise vollständig, geschlossen. Unter dem vollständigen Schließen kann ein Schließen der Schaltkupplung 18 mit oder ohne Kupplungsüberpressung verstanden werden.

Soll aus dem ersten Schaltzustand in den zweiten Schaltzustand umgeschaltet werden, sind also die Brennkraftmaschine 3 und die elektrische Maschine 4 zunächst voneinander entkoppelt, so wird das hierzu notwendige Schließen der Schaltkupplung 18 verzögert, wenn eine Differenz zwischen einem Drehzahlgradient der Antriebswelle 19 und einem Drehzahlgradient der Maschinenwelle 17 einen Drehzahlgradientenschwellenwert übersteigt und/oder die Drehzahlgradienten unterschiedliche Vorzeichen aufweisen. Dies erfolgt besonders bevorzugt, wenn das Umschalten während eines Startens der Brennkraftmaschine 3 durchgeführt wird und gleichzeitig ein Gangwechsel mittels des Gangwechselgetriebes 11 erfolgt, nämlich von einem Ausgangsgang in einen Zielgang. Mit einer derartigen Vorgehensweise ist ein besonders komfortables Ankoppeln der Brennkraftmaschine 3 an die elektrische Maschine 4 möglich.

## Patentansprüche

1. Verfahren zum Betreiben einer Antriebseinrichtung (2) für ein Kraftfahrzeug, die eine Brennkraftmaschine (3), eine elektrische Maschine (4) sowie ein Gangwechselgetriebe (11) aufweist, wobei eine Antriebswelle (19) der Brennkraftmaschine (3) mittels einer Schaltkupplung (18) mit einer Maschinenwelle (17) der elektrischen Maschine (4) koppelbar und die Maschinenwelle (17) mit einer Getriebeeingangswelle (15) des Gangwechselgetriebes (11) gekoppelt ist, wobei eine Abtriebswelle (5) der Antriebseinrichtung (2) mit einer Getriebeausgangswelle (10) des Gangwechselgetriebes (11) gekoppelt oder koppelbar ist, und wobei die Schaltkupplung (18) in einem ersten Schaltzustand zur Entkopplung der Brennkraftmaschine (3) und der elektrischen Maschine (4) geöffnet und in einem zweiten Schaltzustand zur Kopplung der Brennkraftmaschine (3) und der elektrischen Maschine (4) geschlossen ist, wobei bei einem Umschalten von dem ersten Schaltzustand in den zweiten Schaltzustand in einer ersten Betriebsart das Schließen der Schaltkupplung (18) verzögert wird, wenn die Differenz zwischen einem Drehzahlgradient der Antriebswelle (19) und einem Drehzahlgradient der Maschinenwelle (17) einen Drehzahlgradientenschwellenwert übersteigt und/oder die Drehzahlgradienten unterschiedliche Vorzeichen aufweisen, **dadurch gekennzeichnet, dass** bei dem Umschalten von dem ersten Schaltzustand in den zweiten Schaltzustand in einer zweiten Betriebsart das Schließen der Schaltkupplung (18) unverzüglich durchgeführt wird, wobei aus der ersten Betriebsart in die zweite Betriebsart gewechselt wird, wenn ein an der Antriebseinrichtung (2) eingestelltes Vorgabedrehmoment einen Drehmomentschwellenwert überschreitet und/oder eine Drehzahldifferenz zwischen der Drehzahl der Antriebswelle (19) und der Drehzahl der Maschinenwelle (17) kleiner ist als ein Drehzahldifferenzschwellenwert und/oder ein Wandlerschlupf eines Drehmomentwandlers (13) des Gangwechselgetriebes (11) unbekannt ist und/oder ein Geschwindigkeitssignal ungültig ist, und dass ein Gangwechsel von einem Ausgangsgang in einen Zielgang mittels des Gangwechselgetriebes (11) in der ersten Betriebsart während des Umschaltens von dem ersten Schaltzustand in den zweiten Schaltzustand und in der zweiten Betriebsart nach dem Schließen der Schaltkupplung (18) durchgeführt wird.

2. Verfahren nach Anspruch 1, **dadurch gekennzeichnet, dass** das Umschalten von dem ersten Schaltzustand in den zweiten Schaltzustand während eines Startens der Brennkraftmaschine (3) durchgeführt wird.

3. Verfahren nach einem der vorhergehenden Ansprüche, **dadurch gekennzeichnet, dass** im Falle des Verzögerns des Schließens der Schaltkupplung (18) an der Brennkraftmaschine (3) eine Solldrehzahl eingestellt wird, die aus einer Drehzahl der Getriebeausgangswelle (10) und dem Zielgang ermittelt wird.

4. Verfahren nach einem der vorhergehenden Ansprüche, **dadurch gekennzeichnet, dass** das Verzögern durchgeführt wird, bis eine Istdrehzahl der Brennkraftmaschine (3) der Solldrehzahl entspricht und/oder die Differenz zwischen den Drehzahlgradienten kleiner oder gleich dem Drehzahlgradientenschwellenwert ist und/oder die Drehzahlgradienten dasselbe Vorzeichen aufweisen.

5. Verfahren nach einem der vorhergehenden Ansprüche, **dadurch gekennzeichnet, dass** das Verzögern beendet und die Schaltkupplung (18) geschlossen wird, wenn die Istdrehzahl der Solldrehzahl entspricht und/oder die Differenz kleiner oder gleich dem Drehzahlgradientenschwellenwert ist und/oder die Drehzahlgradienten dasselbe Vorzeichen aufweisen.

6. Antriebseinrichtung (2) für ein Kraftfahrzeug, insbesondere zur Durchführung des Verfahrens nach einem oder mehreren der vorhergehenden Ansprüche, die eine Brennkraftmaschine (3), eine elektrische Maschine (4) sowie ein Gangwechselgetriebe (11) aufweist, wobei eine Antriebswelle (19) der Brennkraftmaschine (3) mittels einer Schaltkupplung (18) mit einer Maschinenwelle (17) der elektrischen Maschine (4) koppelbar und die Maschinenwelle (17) mit einer Getriebeeingangswelle (15) des Gangwechselgetriebes (11) gekoppelt ist, wobei eine Abtriebswelle (5) der Antriebseinrichtung (2) mit einer Getriebeausgangswelle (10) des Gangwechselgetriebes (11) gekoppelt oder koppelbar ist, und wobei die Schaltkupplung (18) in einem ersten Schaltzustand zur Entkopplung der Brennkraftmaschine (3) und der elektrischen Maschine (4) geöffnet und in einem zweiten Schaltzustand zur Kopplung der Brennkraftmaschine (3) und der elektrischen Maschine (4) geschlossen ist, wobei die Antriebseinrichtung (2) dazu ausgebildet ist, bei einem Umschalten von dem ersten Schaltzustand in den zweiten Schaltzustand in einer ersten Betriebsart das Schließen der Schaltkupplung (18) zu verzögern, wenn die Differenz zwischen einem Drehzahlgradient der Antriebswelle (19) und einem Drehzahlgradient der Maschinewelle (17) einen Drehzahlgradientenschwellenwert übersteigt und/oder die Drehzahlgradienten unterschiedliche Vorzeichen aufweisen, **dadurch gekennzeichnet, dass** die Antriebseinrichtung dazu ausgebildet ist, dass bei dem Umschalten von dem ersten Schaltzustand in den zweiten Schaltzustand in einer zweiten Betriebsart das Schließen der Schaltkupplung (18) unverzüglich durchgeführt wird, wobei aus der ersten Betriebsart in die zweite Betriebsart gewechselt wird, wenn ein an der Antriebseinrichtung (2) eingestelltes Vorgabedrehmoment einen Drehmomentschwellenwert überschreitet und/oder eine Drehzahldifferenz zwischen der Drehzahl der Antriebswelle (19) und der Drehzahl der Maschinenwelle (17) kleiner ist als ein Drehzahldifferenzschwellenwert und/oder ein Wandlerschlupf eines Drehmomentwandlers (13) des Gangwechselgetriebes (11) unbekannt ist und/oder ein Geschwindigkeitssignal ungültig ist, und dass ein Gangwechsel von einem Ausgangsgang in einen Zielgang mittels des Gangwechselgetriebes (11) in der ersten Betriebsart während des Umschaltens von dem ersten Schaltzustand in den zweiten Schaltzustand und in der zweiten Betriebsart nach dem Schließen der Schaltkupplung (18) durchgeführt wird.

## Claims

1. Method for operating a drive device (2) for a motor vehicle, which has an internal combustion engine (3), an electric machine (4) and a gear-change transmission (11), a drive shaft (19) of the internal combustion engine (3) being able to be coupled to a machine shaft (17) of the electric machine (4) by means of a shifting clutch (18), and the machine shaft (17) being able to be coupled to a transmission input shaft (15) of the gear-change transmission (11), wherein an output shaft (5) of the drive device (2) is coupled or can be coupled to a transmission output shaft (10) of the gear-change transmission (11), and wherein the shifting clutch (18) is open in a first shift state for decoupling the internal combustion engine (3) and the electric machine (4) and is closed in a second shift state for coupling the internal combustion engine (3) and the electric machine (4), wherein, when switching from the first switching state to the second switching state in a first operating mode, the closing of the shifting clutch (18) is delayed if the difference between a speed gradient of the drive shaft (19) and a speed gradient of the machine shaft (17) exceeds a speed gradient threshold value and/or the speed gradients have different signs, **characterised in that,** when switching from the first switching state to the second switching state in a second operating mode, the closing of the shifting clutch (18) is carried out immediately, wherein a changeover from the first operating mode to the second operating mode is made when a preset torque set on the drive device (2) exceeds a torque threshold value and/or a speed difference between the speed of the drive shaft (19) and the speed of the machine shaft (17) is smaller than a speed difference threshold value and/or a converter slip of a torque converter (13) of the gear-change transmission (11) is unknown and/or a speed signal is invalid and **in that** a gear change from an initial gear to a target gear by means of the gear-change transmission (11) is performed in the first operating mode during the changeover from the first shift state to the second shift state and in the second operating mode after the closing of the shifting clutch (18).

2. Method according to claim 1, **characterised in that** the switchover from the first shift state to the second shift state is carried out during a start-up of the internal combustion engine (3).

3. Method according to any one of the preceding claims, **characterised in that,** in the event of the delay of the closing of the shifting clutch (18) on the internal combustion engine (3), a set speed is set which is determined from a speed of the transmission output shaft (10) and the target gear.

4. Method according to any of the preceding claims, **characterised in that** the delay is carried out until an actual speed of the internal combustion engine (3) corresponds to the set speed and/or the difference between the speed gradients is less than or equal to the speed gradient threshold value and/or the speed gradients have the same sign.

5. Method according to any one of the preceding claims, **characterised in that** the delay is terminated and the shifting clutch (18) is closed when the actual speed corresponds to the set speed and/or the difference is less than or equal to the speed gradient threshold and/or the speed gradients have the same sign.

6. Drive device (2) for a motor vehicle, in particular for carrying out the method according to one or more of the preceding claims, which has an internal combustion engine (3), an electric machine (4) and a gear-change transmission (11), a drive shaft (19) of the internal combustion engine (3) being able to be coupled to a machine shaft (17) of the electric machine (4) by means of a shifting clutch (18), and the machine shaft (17) being able to be coupled to a transmission input shaft (15) of the gear-change transmission (11) wherein an output shaft (5) of the drive device (2) is coupled or can be coupled to a transmission output shaft (10) of the gear-change transmission (11), and wherein the shifting clutch (18) is open in a first shift state for decoupling the internal combustion engine (3) and the electric machine (4) and is closed in a second shift state for coupling the internal combustion engine (3) and the electric machine (4), wherein the drive device (2) is configured to delay the closing of the shifting clutch (18) when switching from the first switching state to the second switching state in a first operating mode if the difference between a speed gradient of the drive shaft (19) and a speed gradient of the machine shaft (17) exceeds a speed gradient threshold value and/or the speed gradients have different signs, **characterised in that** the drive device is configured in such a way that, when switching from the first switching state to the second switching state in a second operating mode, the closing of the shifting clutch (18) is carried out immediately, wherein a changeover from the first operating mode to the second operating mode is made when a preset torque set on the drive device (2) exceeds a torque threshold value and/or a speed difference between the speed of the drive shaft (19) and the speed of the machine shaft (17) is smaller than a speed difference threshold value and/or a converter slip of a torque converter (13) of the gear-change transmission (11) is unknown and/or a speed signal is invalid and **in that** a gear change from an initial gear to a target gear by means of the gear-change transmission (11) is performed in the first operating mode during the changeover from the first shift state to the second shift state and in the second operating mode after the closing of the shifting clutch (18).

## Revendications

1. Procédé de fonctionnement d'un appareil de propulsion (2) pour un véhicule automobile qui présente un moteur à combustion interne (3), un moteur électrique (4) ainsi qu'un levier de changement de vitesses (11), dans lequel un arbre d'entraînement (19) du moteur à combustion interne (3) peut être couplé au moyen d'un embrayage (18) à un arbre moteur (17) du moteur électrique (4) et l'arbre moteur (17) est couplé à un arbre d'entrée de levier (15) du levier de changement de vitesses (11), dans lequel un arbre de sortie (5) de l'appareil de propulsion (2) est couplé ou peut être couplé à un arbre de sortie du levier (10) du levier de changement de viesses (11), et dans lequel l'embrayage (18) est ouvert dans un premier état de commutation pour le découplage du moteur à combustion interne (3) et du moteur électrique (4) et dans un second état de commutation est fermé pour le couplage du moteur à combustion interne (3) et du moteur électrique (4), dans lequel lors d'une commutation du premier état de commutation dans le second état de commutation dans un premier mode de fonctionnement, la fermeture de l'embrayage (18) est retardée, lorsque la différence entre un gradient de vitesse de rotation de l'arbre d'entraînement (19) et un gradient de de vitesse de rotation de l'arbre moteur (17) dépasse une valeur seuil de gradient de vitesse de rotation et/ou les gradients de vitesse de rotation présentent différents signes, **caractérisé en** ceque lors de la commutation du premier état de commutation dans le second état de commutation dans un second mode de fonctionnement, la fermeture de l'embrayage (18) est réalisée immédiatement, dans lequel on passe du premier mode de fonctionnement dans le second mode de fonctionnement, lorsqu'un couple de rotation de consigne réglé au niveau de l'appareil de propulsion (2) dépasse une valeur seuil de couple de rotation et/ou une différence de vitesse de rotation entre la vitesse de rotation de l'arbre d'entraînement (19) et la vitesse de rotation de l'arbre moteur (17) est inférieure à une valeur seuil de différence de vitesse de rotation et/ou un patinage de convertisseur d'un convertisseur de couple de rotation (13) du levier de changement de vitesses (11) est inconnu et/ou un signal de vitesse est invalide, et qu'un changement de vitesses d'une vitesse de sortie dans une vitesse cible est réalisé au moyen du levier de changement de vitesses (11) dans le premier mode de fonctionnement pendant la commutation du premier état de commutation dans le second état de commutation et dans le second mode de fonctionnement après la fermeture de l'embrayage (18).

2. Procédé selon la revendication 1, **caractérisé en ce que** la commutation du premier état de commutation dans le second état de commutation est réalisée pendant un démarrage du moteur à combustion interne (3).

3. Procédé selon l'une quelconque des revendications précédentes, **caractérisé en ce que** dans le cas du retard de la fermeture de l'embrayage (18), une vitesse de rotation de consigne est réglée au niveau du moteur à combustion interne (3), laquelle est calculée à partir d'une vitesse de rotation de l'arbre de sortie de levier (10) et de la vitesse cible.

4. Procédé selon l'une quelconque des revendications précédentes, **caractérisé en ce que** le retard est réalisé jusqu'à ce qu'une vitesse de rotation réelle du moteur à combustion interne (3) corresponde à la vitesse de rotation de consigne et/ou la différence entre les gradients de vitesse de rotation est inférieure ou égale à la valeur seuil de gradient de vitesse de rotation et/ou les gradients de vitesse de rotation présentent le même signe.

5. Procédé selon l'une quelconque des revendications précédentes, **caractérisé en ce que** le retard est terminé et l'embrayage (18) est fermé lorsque la vitesse de rotation réelle correspond à la vitesse de rotation de consigne et/ou la différence est inférieure ou égale à la valeur seuil de gradient de vitesse de rotation et/ou les gradients de vitesse de rotation présentent le même signe.

6. Appareil de propulsion (2) pour un véhicule automobile, en particulier pour la réalisation du procédé selon l'une ou plusieurs quelconques des revendications précédentes, qui présente un moteur à combustion interne (3), un moteur électrique (4) ainsi qu'un levier de changement de vitesses (11), dans lequel un arbre d'entraînement (19) du moteur à combustion interne (3) peut être couplé au moyen d'un embrayage (18) à un arbre moteur (17) du moteur électrique (4) et l'arbre moteur (17) est couplé à un arbre d'entrée de levier (15) du levier de changement de vitesses (11), dans lequel un arbre de sortie (5) de l'appareil de propulsion (2) est couplé ou peut être couplé à un arbre de sortie de levier (10) du levier de changement de vitesses (11), et dans lequel l'embrayage (18) est ouvert dans un premier état de commutation pour le découplage du moteur à combustion interne (3) et du moteur électrique (4) et dans un second état de commutation est fermé pour le couplage du moteur à combusiton interne (3) et du moteur électrique (4), dans lequel l'appareil de propulsion (2) est configuré afin de retarder lors d'une commutation du premier état de commutation dans le second état de commutation dans un premier mode de fonctionnement la fermeture de l'embrayage (18) lorsque la différence entre un gradient de vitesse de rotation de l'arbre d'entraînement (19) et un gradient de vitesse de rotation de l'arbre moteur (17) dépasse une valeur seuil de gradient de vitesse de rotation et/ou les gradients de vitesse de rotation présentent différents signes, **caractérisé en ce que** l'appareil de propulsion est configuré afin que lors de la commutation du premier état de commutation dans le second état de commutation dans un second mode de fonctionnement, la fermeture de l'embrayage (18) soit immédiatement réalisée, dans lequel on passe du premier mode de fonctionnement dans le second mode de fonctionnement lorqu'un couple de rotation de consigne réglé au niveau de l'appareil de propulsion (2) dépasse une valeur seuil de couple de rotation et/ou une différence de vitesse de rotation entre la vitesse de rotation de l'arbre d'entraînement (19) et la vitesse de rotation de l'arbre moteur (17) est inférieure à une valeur seuil de différence de vitesse de rotation et/ou un patinage de convertisseur d'un convertisseur de couple de rotation (13) du levier de changement de vitesses (11) est inconnu et/ou un signal de vitesse est invalide, et qu'un changement de vitesse d'une vitesse de sortie dans une vitesse cible est réalisé au moyen du levier de changement de vitesses (11) dans le premier mode de fonctionnement pendant la commutation du premier état de commutation dans le second état de commutation et dans le second mode de fonctionnement après la fermeture de l'embrayage (18).
